# EUROPÄISCHE PATENTSCHRIFT

(11) **EP 0 947 388 B1**
(45) Veröffentlichungstag und Bekanntmachung des Hinweises auf die Patenterteilung: **24.09.2003**
(21) Anmeldenummer: 99104063.5
(22) Anmeldetag: 17.03.1999
(51) Int. Cl.: B60R 9/02, B60R 11/06

(54) **Trägersystem für Nutzfahrzeuge**
Support system for utility vehicles
Système de support pour véhicules utilitaires

(30) Priorität: 03.04.1998 DE 19814977
(43) Veröffentlichungstag der Anmeldung: 06.10.1999
(73) Patentinhaber: MAN Nutzfahrzeuge Aktiengesellschaft, 80976 München (DE)
(72) Erfinder: Albrecht, Erich, 85221 Dachau (DE); Burger, Norbert, 84030 Ergolding (DE); Tittel, Matthias, 85253 Erdweg (DE)

(56) Entgegenhaltungen:
- DE-A- 19 623 844
- US-A- 3 980 217
- US-A- 5 460 304
- US-A- 5 590 819
- US-A- 5 599 053
- US-A- 5 732 866

## Beschreibung

Die Erfindung betrifft ein Trägersystem für Nutzfahrzeuge gemäß dem Oberbegriff des Anspruches 1.

Ein derartiges Trägersystem ist aus der DE 196 23 844 A1 bekannt. Dort ist eine an einem Fahrgestell eines Fahrzeuges angeordnete Halterung gezeigt, an dieser mittels Spannband ein Behälter festspannbar ist. ist.

Die DE 42 11 688 A1 offenbart eine an einem Fahrzeugrahmen eines Nutzfahrzeuges anbringbare Halterungsvorrichtung mit gekrümmten Formkonsolen, an denen zylindrische Druckluftbehälter mittels Klemmschellen befestigbar sind.

Aus der DE 196 21 251 A1 ist eine Vorrichtung zum Befestigen eines Behälters am Fahrgestell eines Kraftfahrzeuges bekannt. Hierbei ist die am Fahrgestell angeordnete Befestigungsvorrichtung mit den Behältern über stoffschlüssig an diesen angeordnete Bleche verbunden.

Es ist Aufgabe der Erfindung, die Anbringung von an einem Längsträger eines Nutzfahrzeuges anzuordnender Behälter technisch und wirtschaftlich zu optimieren.

Diese Aufgabe wird erfindungsgemäß durch die Merkmale des Anspruches 1 gelöst.

Durch die erfindungsgemäße Lösung ist ein technisch und wirtschaftlich optimiertes Trägersystem für die Anbringung von an Längsträgem von Nutzfahrzeugen anzuordnender Behälter gegeben. Die Behälter sind dabei über an den Langsträgern angeordnete Träger gehaltert und auf letzteren mittels Spannbänder festgespannt. Als Behälter können Staukästen, Betriebsstofftanks, Ölbehälter oder dergleichen vorgesehen sein. Die die Behälter haltemden Träger sind etwa rechtwinklig verlaufend und in ihrem Querschnitt zu etwa einem Hutprofil ausgebildet, dessen erhabener Mittelabschnitt eine Anlagefläche bildet, die exakt auf eine hierzu anliegende Anlagefläche des Behälters abgestimmt ist. Infolge der exakten Anpaßbarkeit des Mittelabschnittes des Trägers auf die anliegende Außenkontur des Behälters ist dieser in optimaler Weise gerade in den Bereichen seiner höchsten Steifigkeit abstützbär.

Gemäß der Erfindung ist der Träger mit seinem Vertikalabschnitt unmittelbar oder über ein Adapterbauteil an einem Steg des Längsträgers mittels Befestigungsmitteln befestigt, während er mit seinem Horizontalabschnitt den Behälter unterseitig umgreift und trägt. Auf diese Weise kann der Behälter auf dem Horizontalabschnitt des Trägers aufliegen.

Gemäß einer weiteren Ausgestaltung der Erfindung kann der erhabene Mittelabschnitt des Trägers in einem vom Vertikalabschnitt zum Horizontalabschnitt übergehenden Bereich zunehmend verbreitert ausgeführt sein. Hierdurch kann im Vertikalabschnitt die Anbindung an den Längsträger und im Horizontalabschnitt die Auflage des Behälters weiter verbessert werden.

Gemäß einer weiteren Ausgestaltung der Erfindung kann zwischen Behälter und Träger eine schwingungsdämpfende Gummiunterlage vorgesehen sein. Anstelle von Gummi können auch andere, hierfür geeignete Materialien verwendet sein.

Gemäß einer weiteren Ausgestaltung der Erfindung kann das den Vertikalabschnitt des Trägers befestigende Adapterbauteil zusätzlich eine einen unteren Flansch des Längsträgers untergreifende Strebe aufweisen, die zusammen mit einer über Befestigungsmittel verbundene Halteplatte den unteren Flansch unter Kraft- und Formschluß sandwichartig einfaßt. Infolge der zusätzlichen Verspannung des unteren Flansches des Längsträgers mit der untergreifenden Strebe des Adapterbauteiles ist eine zusätzliche Erhöhung der Festigkeit der Verbindung von Längsträger und Träger gegeben.

Gemäß einer weiteren Ausgestaltung der Erfindung kann das Adapterbauteil in einem Anschlußbereich des Trägers ein des Trägers dessen Hutprofil aufnehmendes, hierzu etwa komplementär ausgebildetes Aufnahmeprofil aufweisen. Des weiteren können im Anschlußbereich von Träger und Adapterbauteil jeweils miteinander korrespondierende Bohrungen zur Aufnahme von Befestigungsmitteln orgesehen sein.

Gemäß einer weiteren Ausgestaltung der Erfindung kann das Adapterbauteil zur Kompensation von winklig zur Fahrzeuglängsrichtung verlaufender, schräger Stegabschnitte des Längsträgers einander gegenüberliegende, keilförmig zueinander verlaufende Anlageflächen aufweisen. Dadurch können die die Behälter aufnehmenden Träger auch an rahmenbedingt schrägen Übergangskonturen der Längsträger des Nutzfahrzeuges angeordnet werden. Des weiteren können bei Anordnung mehrerer Adapterbauteile in einem querschnittsveränderten Übergangsbereich des Fahrzeugrahmens die untereinander auftretenden Abstandsdifferenzen zwischen Behälter und Längsträger durch eine entsprechende Gestaltung der Adapterbauteile kompensiert und auf diese Weise der Behälter in Fahrzeuglängsrichtung befindlicher Anordnung positioniert werden. In einem Sonderfall kann das Adapterbauteil entfallen und der Träger unmittelbar auf dem Längsträger montiert werden.

Gemäß einer weiteren Ausgestaltung der Erfindung können bei Vorsehen mehrerer Träger diese im Bereich ihrer Vertikalabschnitte und/oder Horizontalabschnitte durch wenigstens eine in Fahrzeuglängsrichtung liegende Traverse fest miteinander verbunden sein. Des weiteren kann die wenigstens eine Traverse eine etwa komplementär zu der Anlagefläche des Behälters ausgebildete Anlagefläche aufweisen.

Gemäß einer weiteren Ausgestaltung der Erfindung kann das Adapterbauteil zweiteilig ausgebildet sein. Dabei kann dieses oberseitig aus einem L-förmigen, den Längsträger untergreifenden Profilstück und unterseitig aus einem hieran befestigten, das hutförmige Aufnahmeprofil bildende Bauteil zusammengesetzt und durch Befestigungsmittel miteinander verbunden sein.

Gemäß einer weiteren Ausgestaltung der Erfindung kann der Träger im Bereich wenigstens eines seiner Enden eine Aufnahme und gegebenenfalls eine Aussparung zur Befestigung des den Behälter umschießend fixierenden Spannbandes aufweisen.

Gemäß einer weiteren Ausgestaltung der Erfindung kann der Träger an seinem freien Ende im Bereich seiner Aufnahme zu etwa einem U-förmigen Profil ausgebildet sein.

Gemäß einer weiteren Ausgestaltung der Erfindung kann das den Behälter fixierende Spannband den Behälter komplett umschließen und an einer Rückenfläche des Mittelabschnittes des Trägers anliegend ausgeführt sein. In diesem Fall können die endseitig des Trägers gebildeten Aufnahmen und Aussparungen entfallen, da das umlaufende Spannband innerhalb des hutförmigen Profiles des Trägers fixiert ist

Nachfolgend ist die Erfindung an Hand in der Zeichnung dargestellter Ausführungsbeispiele näher erläutert.

Es zeigen:
- Fig. 1: in räumlicher Darstellung eine erste Ausführungsart eines an einem Längsträger eines Nutzfahrzeuges angeordneten Trägersystems zur Halterung eines Behälters,
- Fig. 2: in Seitenansicht ein an einem Längsträger angeordnetes Trägersystem gemäß Fig. 1,
- Fig. 3: in räumlicher Darstellung eine zweite Ausführungsvariante eines an einem Längsträger eines Nutzfahrzeuges angeordneten Trägersystems,
- Fig. 4: im Vertikalschnitt ein Trägersystem gemäß Fig. 3,
- Fig. 5: in Draufsicht ein über ein Trägersystem gemäß Fig. 1 an einem Längsträger eines Nutzfahrzeuges angeordneter Behälter,
- Fig. 6: in räumlicher Darstellung ein einteilig ausgeführtes Adapterbauteil eines Trägersystems gemäß Fig. 3 und Fig.4,
- Fig. 7: in räumlicher Darstellung ein Adapterbauteil eines Trägersystems gemäß Fig. 1 und Fig. 2,
- Fig. 8: in perspektivischer Ansicht ein U-förmig ausgebildetes Ende eines Trägers,
- Fig. 9: in Seitenansicht ein U-förmig ausgebildetes Ende eines Trägers gemäß Fig. 8, und
- Fig. 10: in Vorderansicht einen etwa hutförmig ausgebildeten Träger eines Trägersystems.

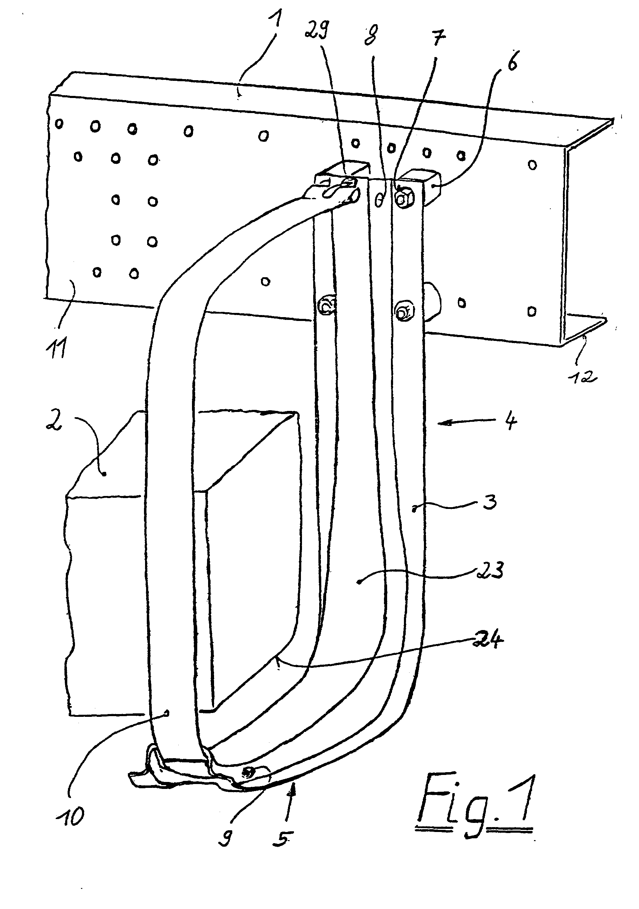

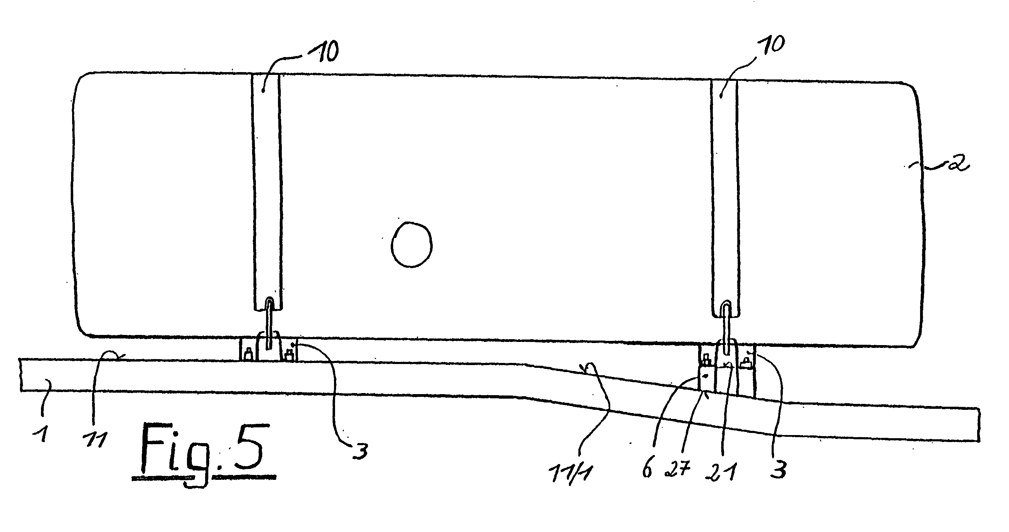

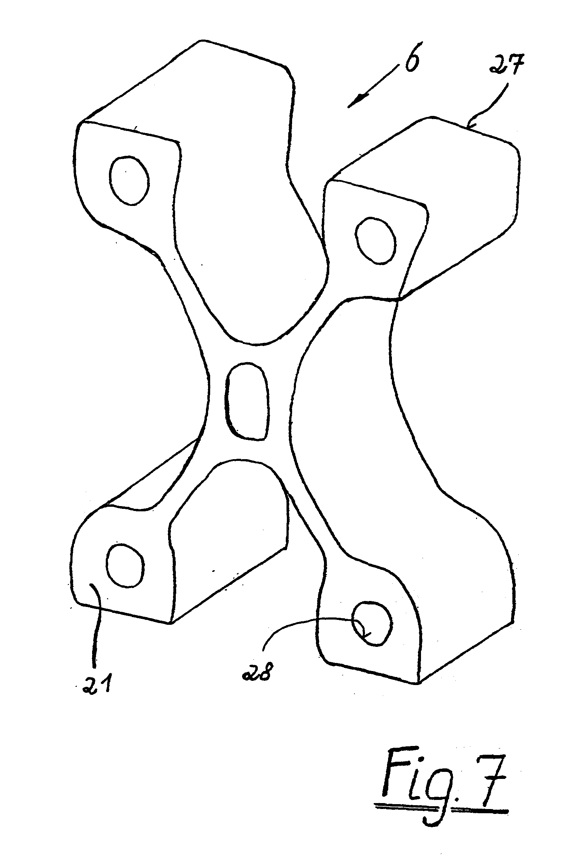

In Fig. 1 ist in räumlicher Darstellung eine erste Ausführungsvariante eines an einem Längsträger 1 eines Nutzfahrzeuges angeordneten Trägersystems zur Halterung eines Behälters 2 gezeigt. Als Behälter 2 können Staukästen, Betriebsstofftanks, Ölbehälter oder dergleichen vorgesehen sein. Der Behälter 2 ist hier aus Übersichtlichkeitsgründen nur fragmentarisch dargestellt. Das Trägersystem weist einen etwa rechtwinklig verlaufenden, in seinem Querschnitt etwa ein Hutprofil 17 bildenden Träger 3 auf, der mit seinem Vertikalabschnitt 4 über ein Adapterbauteil 6 (Fig. 5 und Fig. 7) an einem Steg 11 des Längsträgers 1 mittels Befestigungsmittel 7 befestigt ist.

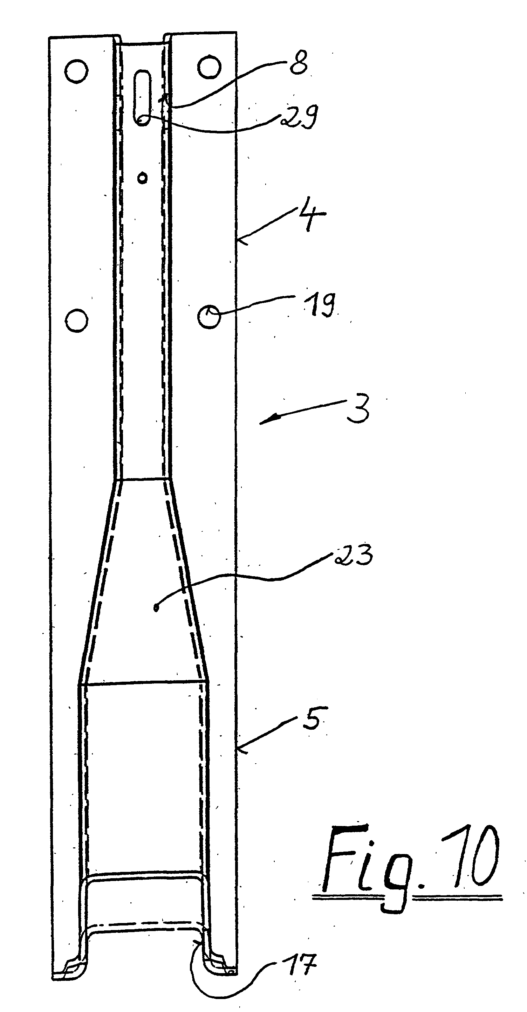

Des weiteren weist der hier dargestellte Träger 3 an seinem Hutprofil 17 einen erhabenen Mittelabschnitt 23 auf, dessen Anlagefläche exakt auf eine Anlagefläche 24 des Behälters 2 abgestimmt ist. Der erhabene Mittelabschnitt 23 des Trägers 3 ist zur Erhöhung der Festigkeit des Trägers 3 und zur optimierten Auflage des hierauf aufliegenden Behälters 2 in einem Übergangsbereich von Vertikalabschnitt 4 zu Horizontalabschnitt 5 zunehmend verbreitert ausgeführt (Fig. 10). Der Träger 3 weist im Bereich seiner Enden jeweils Aufnahmen 8, 9 und wenigstens eine Aussparung 29 zur Befestigung des den Behälter 2 umschließend fixierenden Spannbandes 10 auf. Die Aussparung 29 kann durch eine Ausklinkung, eine Bohrung oder dergleichen gegeben sein.

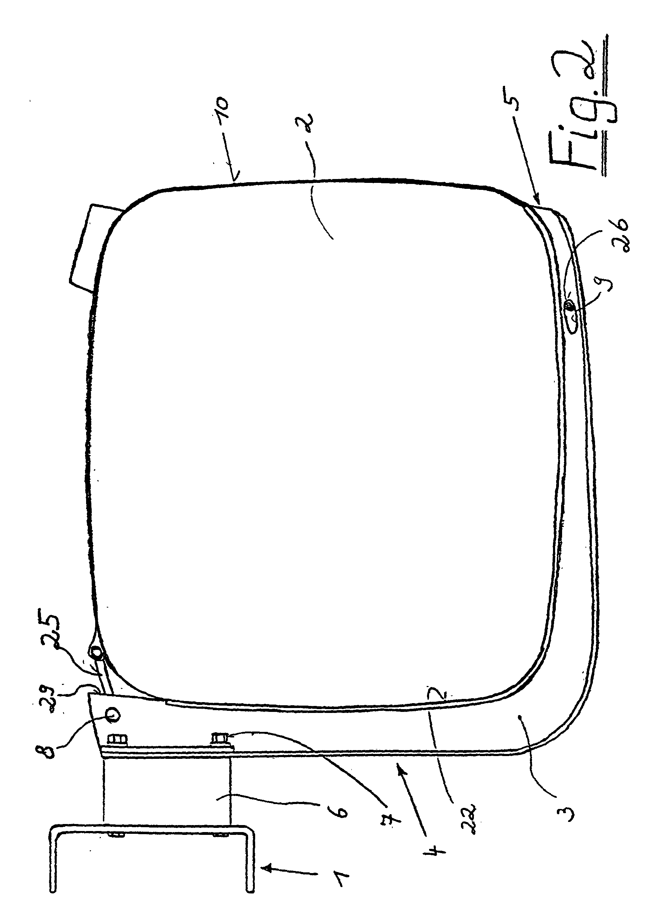

In Fig. 2 ist in Seitenansicht ein an einem Längsträger 1 angeordnetes Trägersystem gemäß Fig. 1 dargestellt. Der den Behälter 2 unterseitig umgreifende und tragende Träger 3 ist mit seinem Vertikalabschnitt 4 an dem am Längsträger 1 angeordneten Adapterbauteil 6 über Befestigungsmittel 7 befestigt. Der Behälter 2 liegt auf einer auf dem Träger 3 aufliegenden, schwingungsdämpfenden Gummimatte 22 auf und ist an seinem freien Umfangsbereich von einem Spannband 10 umschlossen. Das Spannband 10 ist über in den Aufnahmen 8, 9 des Trägers 3 untergebrachte Befestigungsmittel 25, 26 am Träger 3 befestigt. Hierzu sind die Befestigungsmittel 25, 26 durch die Aussparungen 29 des Trägers 3 hindurchgeführt.

Gemäß Fig. 5 weist das Adapterbauteil 6 in allen seinen Ausführungsvarianten eine dem Träger 3 zugewandte und in Fahrzeuglängsrichtung liegende, vertikale Anlagefläche 21 auf, die unabhängig vom Verlauf des Längsträgers 1 eine Anordnung des Behälters 2 in Fahrzeuglängsrichtung gestattet. Demzufolge ist das hier gezeigte, im Bereich einer rahmenbedingten Übergangskontur des Längsträgers 1 an dessen schrägen Stegabschnitt 11/1 angebrachte Adapterbauteil 6 zur Kompensation von Abstandsdifferenzen zwischen Behälter 2 und Längsträger 1 etwa keilförmig ausgebildet und weist hierbei zwei zueinander nicht parellele, stirnseitige Anlageflächen 21, 27 auf. Alternativ kann das Adapterbauteil 6 entfallen und der Träger 3 unmittelbar am Steg 11 des Längsträgers 1 mittels Befestigungsmittel 7 befestigt sein.

In Fig. 7 ist in räumlicher Darstellung ein etwa X-förmig gestaltetes Adapterbauteil 6 mit zwei zueinander parallelen Anlageflächen 21, 27 gezeigt Das Adapterbauteil 6 weist in seinen Randzonen Bohrungen 28 zur Aufnahme von Befestigungsmittel 7 (Fig. 1 und Fig. 2) auf.

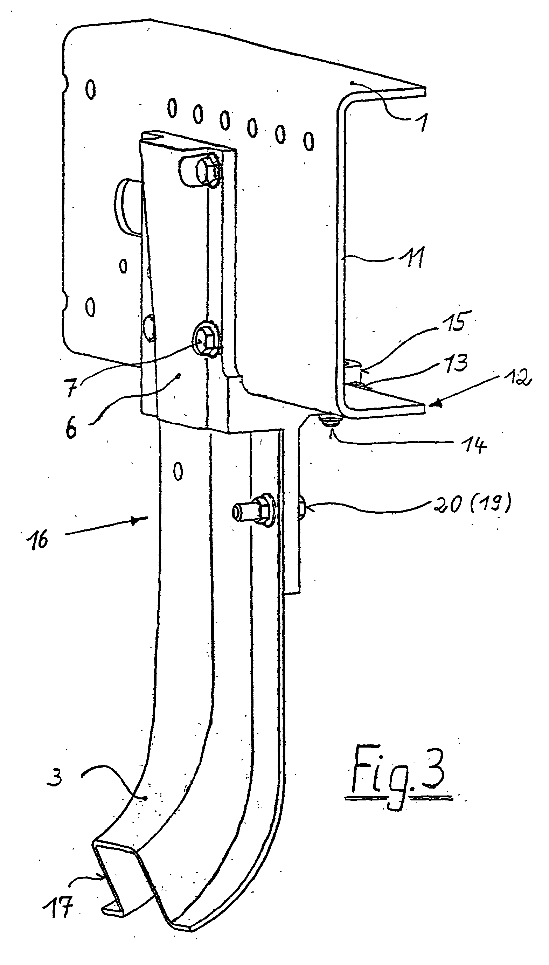

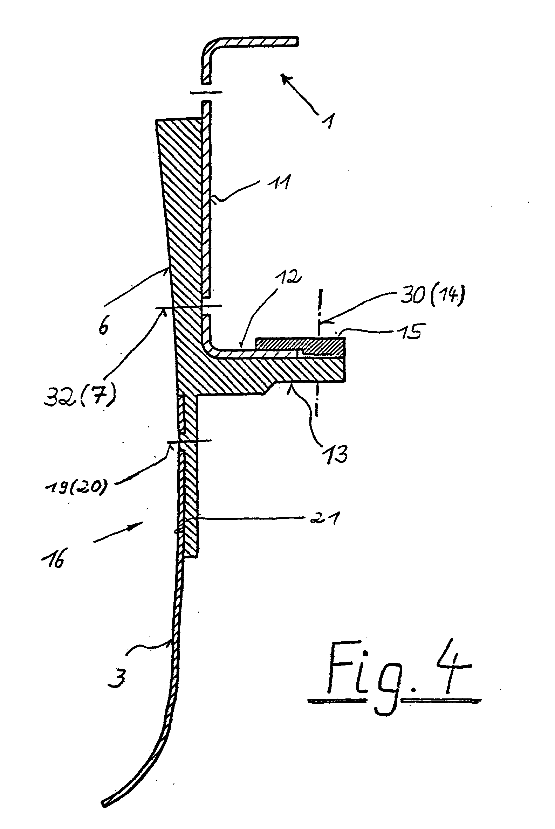

In Fig. 3 ist in perspektivischer Darstellung eine zweite Ausführungsvariante eines an einem Längsträger 1 eines Nutzfahrzeuges angeordneten Trägersystems dargestellt Das den Vertikalabschnitt 4 des Trägers 3 befestigende Adapterbauteil 6 ist hier als einstückiges Bauteil ausgeführt und weist gegenüber seiner ersten Ausführungsart (Fig. 1, 2, 5, 7) zusätzlich eine einen unteren Flansch 12 des Längsträgers 1 untergreifende Strebe 13 auf. Diese faßt zusammen mit einer über Befestigungsmittel 14 verbundene Halteplatte 15 den unteren Flansch 12 des Längsträgers 1 unter Kraft- und Formschluß sandwichartig ein (Fig. 4). Der Träger 3 ist in einem gemeinsam mit dem Adapterbauteil 6 gebildeten Übergangsbereich 16 über Befestigungsmittel 20 am Adapterbauteil 6 befestigt. Die Befestigungsmittel 20 sind innerhalb des Adapterbauteiles 6 gebildeter Bohrungen 19 aufgenommen.Das den Behälter 2 umschließende und fixierende Spannband 10 ist in dieser Version an einer hierfür geeigneten Stelle des Adapterbauteiles 6, beispielsweise mittels der Befestigungsmittel 7 befestigt

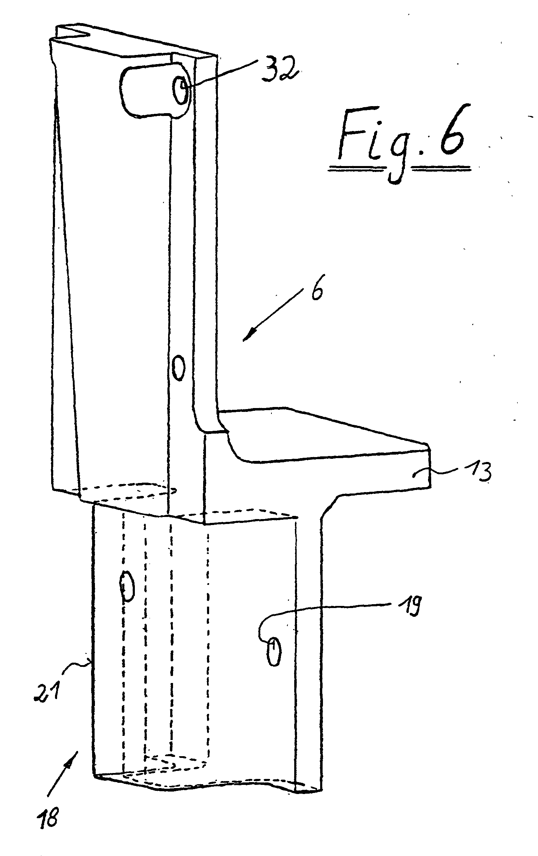

Wie in Fig. 4 gezeigt, sind die im Übergangsbereich 16 vorgesehenen Befestigungsmittel 20 innerhalb von sowohl im Träger 3 als auch im Adapterbauteil 6 angeordneter Bohrungen 19 aufgenommen. Die die Halteplatte 15 auf der Strebe 13 fixierenden Befestigungsmittel 14 sind innerhalb von sowohl in der Strebe 13 als auch in der Halteplatte 15 untergebrachten Bohrungen 30 aufgenommen. Die das Adapterbauteil 6 an dem Längsträger 1 fixierenden Befestigungsmittel 7 (Fig. 3) sind innerhalb von im Adapterbauteil 6 vorgesehener Bohrungen 33 (Fig. 6) aufgenommen.

In Fig. 5 ist in der Draufsicht ein an einem Längsträger 1 über ein Trägersystem befestigter Behälter 2 dargestellt. Dabei ist in einem in Fahrtrichtung gesehen vorderen Bereich des Nutzfahrzeuges dessen Fahrgestell in seiner Breite aufgeweitet Der den Behälter 2 tragende Träger 3 ist hierbei unmittelbar am Längsträger 1 anliegend angeordnet. In einem hinteren, schmäler ausgeführten Bereich des Fahrgestells ist ein den Behälter 2 am Längsträger 1 halterndes, etwa keilförmig ausgeführtes Adapterbauteil 6 mit zueinander schräg ausgeführten, stirnseitigen Anlageflächen 21, 27 vorgesehen. Die dem Träger 3 zugewandte vertikale Anlagefläche 21 des Adapterbauteiles 6 ist in Fahrzeuglängsrichtung liegend angeordnet Die dieser Anlagefläche 21 gegenüberliegend angeordnete, schräg ausgeführte Anlagefläche 27 kompensiert die in dieser Übergangskontur des Längsträgers 1 bestehende, rahmenbedingte Schräge des Stegabschnittes 11/1, so daß der Behälter 2 stets in Fahrzeuglängsrichtung angeordnet werden kann.

In Fig. 6 ist in räumlicher Darstellung ein einteilig ausgeführtes Adapterbauteil 6 dargestellt. Dieses weist in einem von Träger 3 und Adapterbauteil 6 gemeinsam gebildeten Anschlußbereich 16 (Fig. 3) ein das Hutprofil 17 des Trägers 3 aufnehmendes, zu diesem etwa komplementär ausgebildetes Aufnahmeprofil 18 auf. Im Anschlußbereich 16 von Träger 3 und Adapterbauteil 6 sind jeweils miteinander korrespondierende Bohrungen 19 zur Aufnahme von Befestigungsmitteln 20 vorgesehen (Fig. 3 und Fig. 4). In einem oberen Bereich des Adapterbauteiles 6 weist dieses Bohrungen 32 zur Aufnahme von das Adapterbauteil 6 am Längsträger 1 fixierenden Befestigungsmitteln 7 auf. Gemäß einer anderen, hier nicht gezeigten Ausführung kann das Adapterbauteil 6 zweiteilig ausgebildet sein. Dabei ist dieses oberseitig aus einem L-förmigen, den Längsträger 1 untergreifenden Profilstück und unterseitig aus einem hieran befestigten, das hutförmige Aufnahmeprofil 18, bildende Bauteil zusammengesetzt. Beide Teile, des Adapterbauteiles 6 sind durch Befestigungsmittel miteinander verbunden, wobei das L-förmige Profilstück die den unteren Flansch 12 des Längsträgers 1 untergreifende Strebe 13 aufweist. Gemäß einer anderen, hier nicht gezeigten Version kann auch das untere, das Aufnähmepröfil 18 bildende Bauteil die den unteren Flansch 12 des Längsträgers 1 untergreifende Strebe 13 aufweisen.

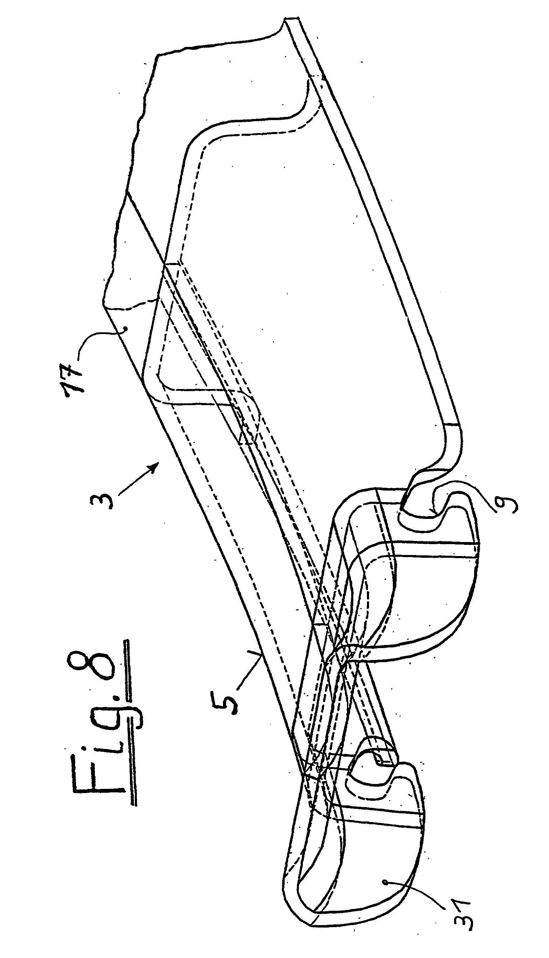

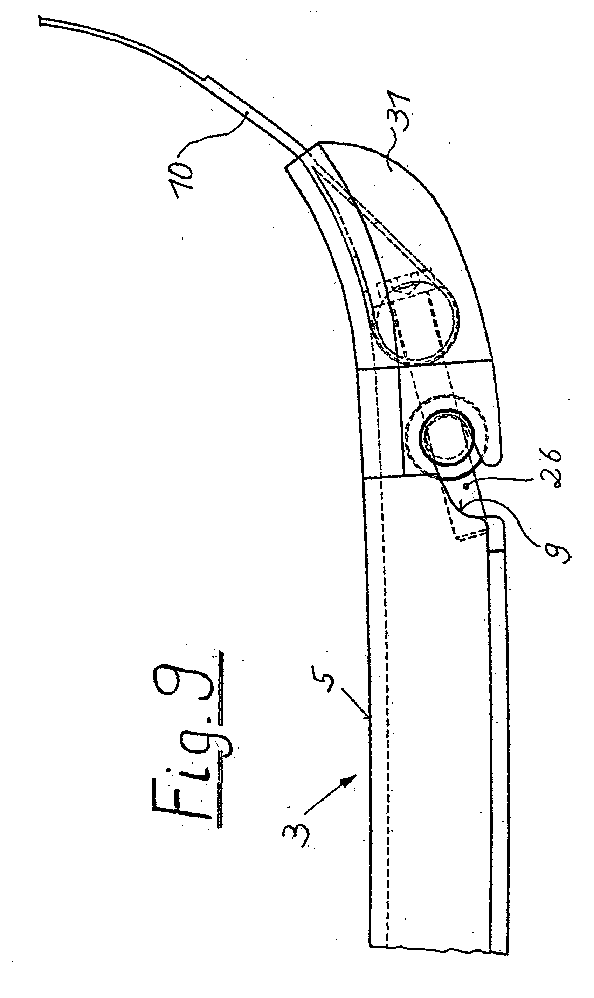

In Fig. 8 ist in perspektivischer Ansicht ein endseitig des Horizontalabschnittes 5 des Trägers 3 vorgesehenes, U-förmig ausgebildetes Profil 31 dargestellt. Dieses geht aus dem Hutprofil 17 des Trägers 3 hervor und dient zu einer verbesserten Anbindung eines im endseitigen Bereich des Trägers 3 zu befestigenden Spannbandes 10 (Fig. 9). Des weiteren weisen die Flanken des U-förmigen Profils 31 die Aufnahmen 9 auf. Diese Aufnahmen 9 dienen zur Befestigung der das Spannband 10 mit dem Träger 3 verbindenden Befestigungsmittel 26. Die Aufnahmen 9 sind hier nach unten offen ausgestaltet und ermöglichen so eine schnelle und vereinfachte Montage der Befestigungsmittel 26 (Fig. 9).

In Fig. 10 ist in Vorderansicht der ein Hutprofil 17 aufweisende Träger 3 eines den Behälter halternden Trägersystems gezeigt. Dabei ist der erhabene Mittelabschnitt 23 des Trägers 3 im Bereich dessen Vertikalabschnittes 4 schmäler ausgebildet als in dessen Horizontalabschnitt 5. Der schmälere Mittelabschnitt 23 im Vertikalabschnitt 4 des Trägers 3 ermöglicht eine vergrößerte Ausgestaltung von in diesem Bereich vorzusehener Bohrungen 19, die zur Aufnahme von den Träger 3 mittelbar oder unmittelbar am Längsträger 1 des Nutzfahrzeuges fixierenden Befestigungsmitteln 7 bestimmt sind.

Gemäß einer hier nicht gezeigten Version können bei Vorsehen mehrerer Träger 3 diese im Bereich ihrer Vertikalabschnitte 4 und/oder Horizontalabschnitte 5 durch wenigstens eine in Fahrzeuglängsrichtung liegende Traverse fest miteinander verbunden sein. Die wenigstens eine Traverse kann eine etwa komplementär zu der Anlagefläche 24 des Behälters 2 ausgebildete Anlagefläche aufweisen.

## Patentansprüche

1. Trägersystem für Nutzfahrzeuge, mit wenigstens einem einen Behälter (2) an einem Längsträger (1) halternden Träger (3), wobei der Behälter (2) mittels eines Spannbandes (10) am Träger (3) befestigt ist und wobei der Träger in seinem Querschnitt zu einem Hutprofil (17) ausgebildet ist, dessen erhabener Mittelabschnitt (23) eine Anlagefläche bildet, die exakt auf eine hieran anliegende Anlagefläche (24) des Behälters (2) abgestimmt ist,
**dadurch gekennzeichnet,**
**daß** der Träger (3) einen Vertikalabschnitt (4) aufweist, der unmittelbar oder über ein Adapterbauteil (6) an einem Steg (11,11/1) des Längsträgers (1) mittels Befestigungsmitteln (7) befestigt ist, und einen Horizontalabschnitt (5) aufweist, der sich rechtwinklig zum Vertikalabschnitt erstreckt und den Behälter (2) unterseitig umgreift und trägt.

2. Trägersystem nach Anspruch 1, **dadurch gekennzeichnet, daß** der erhabene Mittelabschnitt (23) in einem vom Vertikalabschnitt (4) zum Horizontalabschnitt (5) übergehenden Bereich zunehmend verbreitert ausgeführt ist, und daß zwischen Behälter (2) und Träger (3) eine schwingungsdämpfende Gummiunterlage (22) angeordnet ist.

3. Trägersystem nach Anspruch 2, **dadurch gekennzeichnet, daß** das den Vertikalabschnitt (4) des Trägers (3) befestigende Adapterbauteil (6) zusätzlich eine einen unteren Flansch (12) des Längsträgers (1) untergreifende Strebe (13) aufweist, die zusammen mit einer über Befestigungsmittel (14) verbundene Halteplatte (15) den unteren Flansch (12) unter Kraft- und Formschluß sandwichartig einfaßt.

4. Trägersystem nach einem der Ansprüche 2 und 3, **dadurch gekennzeichnet, daß** das Adapterbauteil (6) in einem Anschlußbereich (16) des Trägers(3) ein dessen Hutprofil (17) aufnehmendes, hierzu komplementär' ausgebildetes Aufnahmeprofil (18) aufweist, und daß im Anschlußbereich (16) von Träger (3) und Adapterbauteil (6) jeweils miteinander korrespondierende Bohrungen (19) zur Aufnahme von Befestigungsmitteln (20) vorgesehen sind.

5. Trägersystem nach einem der Ansprüche 1 bis 4, **dadurch gekennzeichnet, daß** das Adapterbauteil (6) zur Kompensation von winklig zur Fahrzeuglängsrichtung verlaufenden, schrägen Stegabschnitten (11/1) des Längsträgers (1) einander gegenüberliegende, keilförmig zueinander verlaufende Anlageflächen (21, 27) aufweist.

6. Trägersystem-nach einem oder mehreren der vorangegangenen Ansprüche 1 bis 5, **dadurch gekennzeichnet, daß** bei Vorsehen mehrerer Träger (3) diese im Bereich ihrer Vertikalabschnitte (4) und/oder Horizontalabschnitte (5) durch wenigstens eine in Fahrzeuglängsrichtung liegende Traverse fest miteinander verbunden sind, und daß die wenigstens eine Traverse eine komplementär zu der Anlagefläche (24) des Behälters (2) ausgebildete Anlagefläche aufweist.

7. Trägersystem nach einem oder mehreren der vorangegangenen Ansprüche 1 bis 6, **dadurch gekennzeichnet, daß** das Adapterbauteil, (6) zweiteilig ausgebildet ist, wobei dieses oberseitig aus einem L-förmigen, den Längsträger (1) untergreifenden Profilstück und unterseitig aus einem hieran befestigten, das hutförmige Aufnahmeprofil (18) bildende Bauteil zusammengesetzt und durch Befestigungsmittel miteinander verbunden ist.

8. Trägersystem nach einem oder mehreren der vorangegangenen Ansprüche 1 bis 7, **dadurch gekennzeichnet, daß** der Träger (3) im Bereich wenigstens eines seiner Enden eine Aufnahme (8, 9) und gegebenenfalls eine Aussparung (29) zur Befestigung des den Behälter (2) umschließend fixierenden Spannbandes (10) aufweist.

9. Trägersystem nach Anspruch 8, **dadurch gekennzeichnet, daß** der Träger (3) an seinem freien Ende im Bereich seiner Aufnahme (9) zu einem U-förmigen Profil (31) ausgebildet ist.

10. Trägersystem nach Anspruch 1, **dadurch gekennzeichnet, daß** das den Behälter (2) fixierende Spannband (10) den Behälter (2) komplett umschließt und an einer Rückenfläche des Mittelabschnittes (23) des Trägers (3) anliegend ausgeführt ist.

## Claims

1. Carrier system for commercial vehicles, with at least one carrier (3) holding a tank (2) attached to a longitudinal member (1) by means of a clamping strap (10), the cross-section of the carrier being designed as a hat-type section (17) whose raised centre portion (23) forms a contact face exactly corresponding to a contact face (24) on the tank (2), said faces being in physical contact, **characterised in that** the carrier (3) has a vertical section (4) attached, directly or via an adapter part, to a web (11, 11/1) of the longitudinal member (1) by means of fastening elements (7) and has a horizontal section (5) extending at right angles to said vertical section and encompasses and carries the underside of the tank (2).

2. Carrier system according to Claim 1, **characterised in that** the raised centre portion (23) becomes increasingly wider in a transition area from the vertical section (4) to the horizontal section (5) and that a vibration-damping rubber underlay (22) is arranged between the tank (2) and the carrier (3).

3. Carrier system according to Claim 2, **characterised in that** the adapter part (6) fastening the vertical section (4) of the carrier (3) is additionally provided with a strut (13) which reaches under a lower flange (12) of the longitudinal member (1) and, together with a holding plate (15) connected via fastening elements (14), encompasses the lower flange (12) in a sandwich-type manner by means of a positive connection.

4. Carrier system according to one of the Claims 2 and 3, **characterised in that** in a connection area (16) of the carrier (3) the adapter part (6) has a support section (18) supporting and being complementary to the hat-type section (17) of the carrier (3) and that in the connection area (16) of the carrier (3) and the adapter part (6) bores (19) corresponding with each other are provided for the installation of fastening elements (20).

5. Carrier system according to one of the Claims 1 to 4, **characterised in that**, for offsetting obliquely arranged web sections (11/1) of the longitudinal member (1) which extend at an angle to the vehicle's longitudinal axis, the adapter part (6) is provided with contact faces (21, 27) arranged opposite one another in a wedge-type manner.

6. Carrier system according to one or several of the foregoing Claims 1 to 5, **characterised in that**, if several carriers (3) are provided, these carriers are firmly connected with one another in the area of their vertical sections (4) and/or horizontal sections (5) by means of at least one cross member located in the vehicle's longitudinal axis and that the at least one cross member is provided with a contact face complementary to the contact face (24) on the tank (2).

7. Carrier system according to one or several of the foregoing Claims 1 to 6, **characterised in that** the adapter part (6) is designed as a two-piece unit composed of an upper, L-shaped section reaching under the longitudinal member (1) and of a lower, hat-shaped support section (18) connected to said upper section, both sections being connected with each other by means of fastening elements.

8. Carrier system according to one or several of the foregoing Claims 1 to 7, **characterised in that** at least one of the end areas of the carrier (3) is provided with a support device (8, 9) and, if necessary, with a recess (29) for fastening the clamping strap (10) encompassing and fixing the tank (2).

9. Carrier system according to Claim 8, **characterised in that** in the area of the support device (9) the free end of the carrier (3) is designed as a U-shaped section (31 ).

10. Carrier system according to Claim 1, **characterised in that** the clamping strap (10) completely encompasses the tank (2) and is designed so as to be in contact with the back face of the centre portion (23) of the carrier (3).

## Revendications

1. Système de support pour véhicules industriels, avec au moins un support (3) maintenant un réservoir (2) sur un longeron (1), auquel cas le réservoir (2) est fixé au support (3) à l'aide d'un collier de serrage (10) et auquel cas le support est constitué dans sa section d'un profilé en U (17) dont la section centrale (23) profilée forme une surface d'appui qui est adaptée exactement à une surface d'appui (24) du réservoir (2), **caractérisé par le fait que** le support (3) présente une section verticale (4) fixée directement ou bien par le biais d'un élément d'adaptation (6) sur un montant (11, 11/1) du longeron (1) par des moyens de fixation (7) et présente une section horizontale (5) qui s'étend perpendiculairement par rapport à la section verticale et enveloppe par le dessous le réservoir (2) et porte celui-ci.

2. Système de support selon la revendication 1, **caractérisé par le fait que** la section centrale profilée (23) est exécutée en une pièce s'élargissant progressivement de la section verticale (4) à la section horizontale (5), et **par le fait qu'**une cale en caoutchouc (22) amortissant les vibrations est disposée entre le réservoir (2) et le support (3).

3. Système de support selon la revendication 2, **caractérisé par le fait que** l'élément d'adaptation (6) fixant la section verticale (4) du support (3) présente en plus un montant (13) saisissant par le dessous une bride inférieure (12) du longeron (1), et le montant (13) cercle en sandwich, conjointement avec une plaque de maintien (15) reliée par des moyens de fixation (14), la bride inférieure (12) par adhérence et obstacle géométrique.

4. Système de support selon l'une des revendications 2 et 3, **caractérisé par le fait que** l'élément d'adaptation (6) présente dans la plage de raccordement (16) du longeron (3) un profilé de logement (18) accueillant un profilé en U (17) du longeron (3), et **par le fait que** dans la plage de raccordement (16) du longeron (3) et de l'élément d'adaptation (6), des alésages (19) correspondant les uns aux autres sont prévus pour recevoir les moyens de fixation (20).

5. Système de support selon l'une des revendications 1 à 4, **caractérisé par le fait que** l'élément d'adaptation (6) présente des surfaces d'appui (21, 27) opposées et aboutissant ensemble en forme de fuseaux pour compenser des sections du montant (11/1) du longeron (1) obliques et formant un angle déterminé par rapport à l'axe longitudinal du véhicule.

6. Système de support selon une ou plusieurs des revendications 1 à 5 mentionnées précédemment, **caractérisé par le fait que** lorsque plusieurs supports (3) existent, ceux-ci sont reliés de manière fixe par au moins une traverse se trouvant selon l'axe longitudinal du véhicule au niveau de leurs sections verticales (4) et/ou des sections longitudinales (5), et **par le fait qu'**au moins une traverse présente une surface d'appui constituée en plus de la surface d'appui (24) du réservoir (2).

7. Système de support selon une ou plusieurs des revendications 1 à 6 mentionnées précédemment, **caractérisé par le fait que** l'élément d'adaptation (6) est constitué de deux pièces, auquel cas celle-ci se compose sur la partie supérieure d'une pièce profilée en forme de L enserrant le longeron (1) par le dessous et sur la partie inférieure la pièce de construction formée d'un profilé (18) en forme de U, et les deux pièces sont reliées ensemble par des moyens de fixation.

8. Système de support selon une ou plusieurs des revendications 1 à 7 mentionnées précédemment, **caractérisé par le fait que** le support (3) présente au moins dans la zone d'une de ses extrémités un logement (8, 9) et, le cas échéant, un évidement pour fixer le collier de serrage (10) permettant de fixer le réservoir (2) sur toute sa circonférence.

9. Système de support selon la revendication 8, **caractérisé par le fait que** le support (3) est formé d'un profilé en forme de U (31) à son extrémité libre au niveau de son logement (9).

10. Système de support selon la revendication 1, **caractérisé par le fait que** le collier de serrage (10) fixant le réservoir (2) entoure complètement le réservoir (2) et est exécutée en appui sur la surface arrière de la section centrale (23) du support (3).
